# FASCICULE DE BREVET EUROPEEN

(11) **EP 0 901 438 B1**
(45) Date de publication et mention de la délivrance du brevet: **05.07.2000**
(21) Numéro de dépôt: 97919469.3
(22) Date de dépôt: 03.04.1997
(51) Int. Cl.: B60T 8/18, B60T 8/26, B60T 11/34

(54) **CORRECTEUR DE FREINAGE A JOINT PERFECTIONNE**
BREMSREGULATOR MIT VERBESSERTER DICHTUNG
BRAKE REGULATOR WITH IMPROVED SEAL

(30) Priorité: 05.06.1996 FR 9606909
(43) Date de publication de la demande: 17.03.1999
(73) Titulaire: Bosch Systemes de Freinage, 93700 Drancy (FR)
(72) Inventeur: SIMON BACARDIT, Juan, F-93700 Drancy (FR); CORTES GUASCH, Esteve, F-93700 Drancy (FR); SACRISTAN, Fernando, F-93700 Drancy (FR)
(74) Mandataire: Bentz, Jean-Paul
(86) Numéro de dépôt international: FR9700594
(87) Numéro de publication internationale: WO9746432

(56) Documents cités:
- EP-A- 0 383 507
- DE-A- 4 020 671
- DE-A- 4 315 827
- FR-A- 2 588 228

## Description

La présente invention concerne un correcteur de freinage, destiné à être interposé entre une source de pression hydraulique et un circuit de freinage de véhicule automobile, et comportant : un boîtier pourvu d'au moins un alésage; un piston hydraulique coulissant dans cet alésage et y délimitant des première et seconde chambres de pression, rendues étanches l'une par rapport à l'autre au moyen d'un joint annulaire élastique entourant le piston, et susceptibles de communiquer sélectivement l'une avec l'autre à travers un clapet installé sur un perçage du piston, les première et seconde chambres étant respectivement reliées, en fonctionnement, à la source de pression et au circuit de freinage; et un poussoir agissant sur le clapet dans un sens propre à en permettre l'ouverture lorsqu'une pression relativement basse règne dans la seconde chambre, tandis que le piston coulisse axialement dans l'alésage, sous l'effet d'une élévation de pression dans cette seconde chambre, dans un sens propre à permettre la fermeture du clapet.

Les correcteurs sont bien connus dans l'art antérieur, tel qu'illustré par exemple par les documents de brevets US 4 615 566, US 4 624 507, et EP 0 223 641, et permettent de distribuer à leur sortie, et à destination des freins arrière des véhicules à moteur, une pression de freinage corrigée, liée à la pression de freinage appliquée à la fois sur leur entrée et sur les roues avant du véhicule, mais néanmoins inférieure à cette dernière au delà d'un seuil déterminé.

L'un des problèmes rencontrés dans la réalisation des correcteurs réside dans la difficulté à obtenir l'évolution souhaitée de la pression de sortie par rapport à la pression d'entrée, et plus précisément d'éviter que la loi liant la pression de sortie à la pression d'entrée ne présente une anomalie, ou "plat", traduisant un défaut au moins local d'évolution de la pression de sortie.

Dans ce contexte, l'invention a pour but de proposer un correcteur exempt d'anomalie de ce type, et repose sur le double mérite d'avoir identifié la cause de cette anomalie et d'y avoir apporté remède.

A cette fin, le correcteur de l'invention est essentiellement caractérisé en ce que le joint annulaire est logé sans jeu axial dans une gorge qui est creusée dans le piston et qui comporte une première face d'appui, en forme de couronne circulaire, du côté de la première chambre, une seconde face d'appui, également en forme de couronne circulaire, du côté de la seconde chambre, et un fond cylindrique reliant les première et seconde faces d'appui, la gorge présentant ainsi une section rectangulaire, en ce que le joint présente un pourtour au moins partiellement cylindrique par lequel il est en contact avec l'alésage, en ce que le joint présente en regard de la seconde face d'appui une zone annulaire également en forme de couronne circulaire, par laquelle il se plaque sur la seconde face d'appui, et en ce que le joint présente, au moins par rapport à la première face d'appui et au fond cylindrique, des dégagements communiquant avec la première chambre pour permettre à la pression régnant dans la première chambre de déformer radialement le joint en le sollicitant contre l'alésage.

Selon le mode de réalisation le plus simple envisagé, le joint est symétrique par rapport à un plan médian, tandis que les première et seconde faces d'appui de la gorge ont des rayons externes différents, et que la zone annulaire présente un rayon interne supérieur au rayon externe de la première face d'appui et inférieur au rayon externe de la seconde face d'appui.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue générale en coupe d'un correcteur conforme à l'invention;

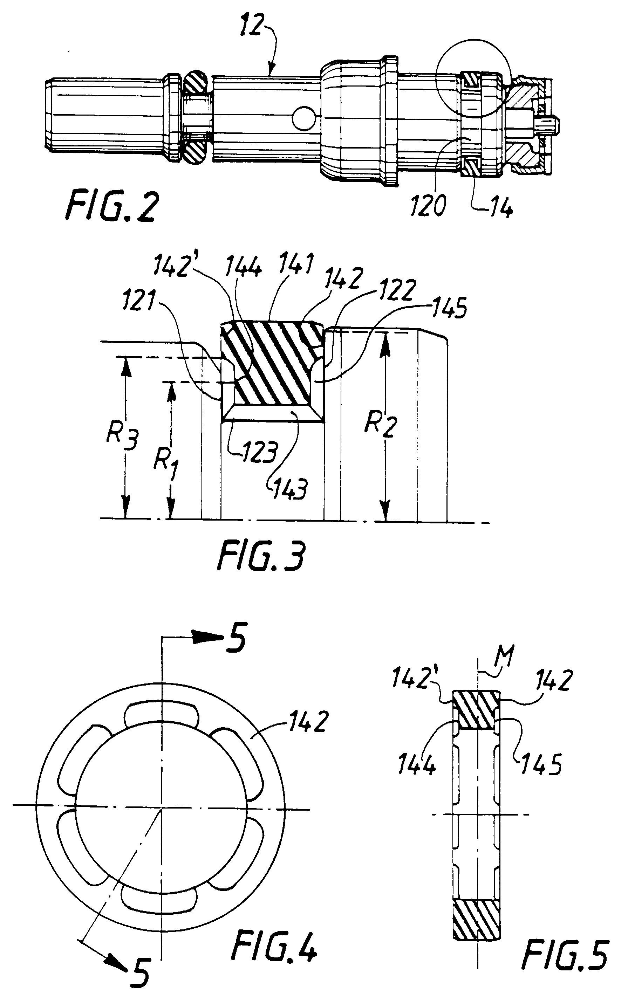

- la figure 2 est une vue agrandie, représentant le piston du correcteur de la figure 1;
- la figure 3 est une vue de détail agrandie de la partie encerclée de la figure 2;
- la figure 4 est une vue en plan du joint du piston; et
- la figure 5 est une vue en coupe du joint du piston, réalisée suivant la ligne 5-5 de la figure 4.

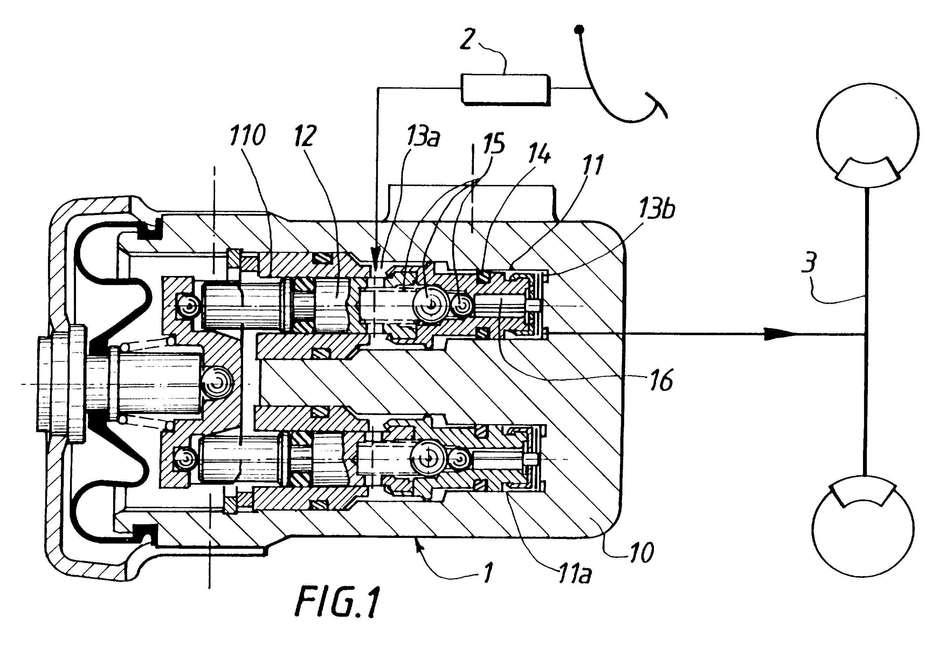

Comme le montre la figure 1, l'invention concerne un correcteur de freinage 1, destiné à être interposé entre une source de pression hydraulique, telle qu'un maître-cylindre 2, et le circuit de freinage arrière 3 d'un véhicule automobile, de manière à fournir à ce circuit de freinage 3 une pression égale à la pression de sortie de la source de pression pour les faibles valeurs de cette pression, et une pression inférieure à celle de la source pour les valeurs plus élevées de cette dernière.

Ce correcteur comprend, de façon classique, un boîtier 10 pourvu d'au moins un alésage 11, un piston hydraulique 12 coulissant dans cet alésage et y délimitant des première et seconde chambres de pression 13a et 13b, rendues étanches l'une par rapport à l'autre au moyen d'un joint annulaire élastique 14 entourant le piston, et susceptibles de communiquer sélectivement l'une avec l'autre à travers un clapet 15 installé sur un perçage du piston 12.

Dans le mode de réalisation représenté à la figure 1, le correcteur comprend en fait deux alésages 11 et 11a, les composants logés dans l'alésage 11a étant totalement homologues de ceux qui sont logés dans l'alésage 11.

En fonctionnement, les première et seconde chambres 13a, 13b sont respectivement reliées à la source de pression 2 et au circuit de freinage 3.

Un poussoir 16 appuyé sur le boîtier 1 agit sur le clapet 15 dans un sens propre à en permettre l'ouverture lorsqu'une pression relativement basse règne dans la seconde chambre 13b et le piston 12 coulisse axialement dans l'alésage 11, sous l'effet d'une élévation de pression dans cette seconde chambre 13b, dans un sens propre à permettre la fermeture du clapet.

A cette fin, selon une conception classique, le piston 11 est par exemple un piston différentiel présentant, dans la première chambre 13a du côté opposé à la seconde 13b, une section de pression définie par un alésage 110, inférieure à la section de pression définie par l'alésage 11.

Comme le montre la figure 1, le clapet 15 peut comprendre plusieurs billes sollicitées par des ressorts en direction à la fois du poussoir 16 et de sièges respectifs formés dans le perçage du piston.

Selon l'invention, le joint annulaire 14 est logé sans jeu axial dans une gorge 120 qui est creusée dans le piston 12 et qui comporte une première face d'appui 121, en forme de couronne circulaire, du côté de la première chambre 13a, une seconde face d'appui 122, également en forme de couronne circulaire, du côté de la seconde chambre 13b, et un fond cylindrique 123 reliant les première et seconde faces d'appui, la gorge présentant ainsi une section de forme rectangulaire.

Par ailleurs, le joint 14 présente : un pourtour 141 au moins partiellement cylindrique par lequel il est en contact avec l'alésage 11, une zone annulaire 142 également en forme de couronne circulaire, disposée en regard de la seconde face d'appui 122, et par laquelle il se plaque sur cette seconde face d'appui, et des dégagements tels qu'un jeu radial 143, et des canaux 144, 145, prévus au moins en regard de la première face d'appui 121 et du fond cylindrique 123, ces dégagements communiquant avec la première chambre 13a pour permettre à la pression régnant dans cette première chambre de déformer radialement le joint 14 en le sollicitant contre l'alésage 11.

Selon le mode de réalisation le plus simple proposé par l'invention, le joint 14 est symétrique par rapport à un plan médian M.

Dans ce cas, les première et seconde faces d'appui 121, 122 de la gorge ont de préférence des rayons externes R1, R2 différents, et la zone annulaire 142, 142' présente un rayon interne R3 supérieur au rayon externe R1 de la première face d'appui 121 et inférieur au rayon externe R2 de la seconde face d'appui 122.

## Revendications

1. Correcteur de freinage, destiné à être interposé entre une source de pression hydraulique (2) et un circuit de freinage (3) de véhicule automobile, et comportant : un boîtier (10) pourvu d'au moins un alésage (11); un piston hydraulique (12) coulissant dans cet alésage et y délimitant des première (13a) et seconde chambres (13b) de pression, rendues étanches l'une par rapport à l'autre au moyen d'un joint annulaire élastique (14) entourant le piston, et susceptibles de communiquer sélectivement l'une avec l'autre à travers un clapet (15) installé sur un perçage du piston, les première et seconde chambres étant respectivement reliées, en fonctionnement, à la source de pression et au circuit de freinage; et un poussoir (16) agissant sur le clapet dans un sens propre à en permettre l'ouverture lorsqu'une pression relativement basse règne dans la seconde chambre, tandis que le piston coulisse axialement dans l'alésage, sous l'effet d'une élévation de pression dans cette seconde chambre, dans un sens propre à permettre la fermeture du clapet, caractérisé en ce que le joint annulaire (14) est logé sans jeu axial dans une gorge (120) qui est creusée dans le piston (12) et qui comporte une première face d'appui (121), en forme de couronne circulaire, du côté de la première chambre (13a), une seconde face d'appui (122), également en forme de couronne circulaire, du côté de la seconde chambre (13b), et un fond cylindrique (123) reliant les première et seconde faces d'appui, la gorge (120) présentant ainsi une section rectangulaire, en ce que le joint (14) présente un pourtour (141) au moins partiellement cylindrique par lequel il est en contact avec l'alésage (11), en ce que le joint (14) présente en regard de la seconde face d'appui (122) une zone annulaire (142) également en forme de couronne circulaire, par laquelle il se plaque sur la seconde face d'appui, et en ce que le joint (14) présente, au moins par rapport à la première face d'appui (121) et au fond cylindrique (123), des dégagements (143, 144, 145) communiquant avec la première chambre (13a) pour permettre à la pression régnant dans la première chambre de déformer radialement le joint en le sollicitant contre l'alésage (11).

2. Correcteur de freinage suivant la revendication 1, caractérisé en ce que le joint (14) est symétrique par rapport à un plan médian (M), en ce que les première et seconde faces d'appui (121, 122) de la gorge (120) ont des rayons externes différents (R1, R2), et en ce que la zone annulaire (142, 142') présente un rayon interne (R3) supérieur au rayon externe (R1) de la première face d'appui et inférieur au rayon externe (R2) de la seconde face d'appui.

## Claims

1. A braking control valve for interposition between a source of hydraulic pressure (2) and a brake circuit (3) of an automobile vehicle and comprising: a housing (10) provided with at least one bore (11); a hydraulic piston (12) sliding in this bore and defining therein first (13a) and second (13b) pressure chambers sealed from each other by means of an elastic annular seal (14) surrounding the piston and capable of communicating selectively with each other through a one way valve (15) installed in a passage in the piston, the first and second chambers being connected in use respectively to the source of pressure and to the brake circuit; and a tappet (16) acting on the one way valve in a direction such as to enable it to open when a relatively low pressure exists in the second chamber, whereas the piston slides axially in the bore under the influence of an increase in pressure in the second chamber in a direction such as to enable the one way valve to close, characterised in that the annular seal (14) is fitted without axial clearance in a groove (120) which is formed in the piston (12) and which comprises a first bearing surface (121) of circular ring shape on the side of the first chamber (13a), a second bearing surface (122) also of circular ring shape on the side of the second chamber (13b), and a cylindrical bottom surface (123) connecting the first and second bearing surfaces, the groove (120) thus presenting a rectangular cross section, and in that the seal (14) presents a circumference (141) which is at least partially cylindrical and which makes contact between the seal and the bore (11), in that the seal (14) presents an annular zone (142) which is also of circular ring shape facing the second bearing surface (122) by means of which it lies flat on the second bearing surface, and in that the seal (14) presents at least relative to the first bearing surface (121) and to the cylindrical bottom surface (123) recesses (143, 144, 145) communicating with the first chamber (13a) to enable the pressure existing in the first chamber to deform the seal radially by urging it against the bore (11).

2. A braking control valve in accordance with claim 1, characterised in that the seal (14) is symmetrical relative to a medium plane (M), in that the first and second bearing surfaces (121, 122) of the groove (120) have different external radiuses (R1, R2), and in that the annular zone (142, 142') presents an internal radius (R3) which is greater than the external radius (R1) of the first bearing surface and less than the external radius (R2) of the second bearing surface.

## Patentansprüche

1. Bremskraftregler, der zum Einsetzen zwischen einer Hydraulikdruckquelle (2) und einem Bremskreis (3) eines Kraftfahrzeugs bestimmt ist, mit einem Gehäuse (10), das mit zumindest einer Bohrung (11) versehen ist, einem Hydraulikkolben (12), der in dieser Bohrung gleitet und darin eine erste Druckkammer (13a) und eine zweite Druckkammer (13b) begrenzt, welche durch eine den Kolben umschließende elastische Ringdichtung (14) gegeneinander abgedichtet und durch ein Ventilelement (15) selektiv miteinander verbindbar sind, welches an einer Öffnung des Kolbens angebracht ist, wobei die erste bzw. die zweite Kammer im Betrieb mit der Druckquelle bzw. dem Bremskreis verbunden sind, und mit einem Stößel (16), der auf das Ventilelement in einer Richtung einwirkt, die dessen Öffnen dann ermöglichen kann, wenn in der zweiten Kammer ein relativ niedriger Druck herrscht, während der Kolben unter der Wirkung einer Druckerhöhung in dieser zweiten Kammer axial in der Bohrung gleitet, und zwar in einer Richtung, die das Schließen des Ventilelements ermöglichen kann, dadurch gekennzeichnet, daß die Ringdichtung (14) axial spielfrei in einer Nut (120) aufgenommen ist, die im Kolben (12) ausgeführt ist und eine erste kreisringförmige Abstützfläche (121) auf der Seite der ersten Kammer (13a), eine ebenfalls kreisringförmige zweite Abstützfläche (122) auf der Seite der zweiten Kammer (13b) und einen zylinderförmigen Boden (123) enthält, der die erste und die zweite Abstützfläche verbindet, wobei die Nut (120) somit einen rechteckförmigen Querschnitt aufweist, daß die Dichtung (14) einen zumindest teilweise zylindrischen Umfang (141) aufweist, durch den sie mit der Bohrung (11) in Kontakt steht, daß die Dichtung (14) der zweiten Abstützfläche (122) gegenüberliegend einen ebenfalls kreisringförmigen Ringbereich (142) aufweist, mit dem sie an der zweiten Abstützfläche anliegt, und daß die Dichtung (14) zumindest bezüglich der ersten Abstützfläche (121) und des zylinderförmigen Bodens (123) Freiflächen (143, 144, 145) aufweist, die mit der ersten Kammer (13a) in Verbindung stehen, um es dem in der ersten Kammer herrschenden Druck zu ermöglichen, die Dichtung radial zu verformen, indem er sie gegen die Bohrung (11) beaufschlagt.

2. Bremskraftregler nach Anspruch 1, dadurch gekennzeichnet, daß die Dichtung (14) zu einer Mittelebene (M) symmetrisch verläuft, daß die erste und die zweite Abstützfläche (121, 122) der Nut (120) unterschiedliche Außenradien (R1, R2) haben und daß der Ringbereich (142, 142') einen Innenradius (R3) aufweist, der größer als der Außenradius (R1) der ersten Abstützfläche und kleiner als der Außenradius (R2) der zweiten Abstützfläche ist.
